# EUROPEAN PATENT APPLICATION

(11) **EP 4 459 941 A1**
(43) Date of publication of application: **06.11.2024**
(21) Application number: 22914712.9
(22) Date of filing: 26.12.2022
(51) Int. Cl.: H04L 41/16

(54) **COMMUNICATION METHOD AND APPARATUS, AND RELATED DEVICE**

(30) Priority: 31.12.2021 CN 202111672336
(71) Applicant: VIVO MOBILE COMMUNICATION CO., LTD., Dongguan, Guangdong 523863 (CN)
(72) Inventor: YANG, Ang, Dongguan, Guangdong 523863 (CN); SUN, Peng, Dongguan, Guangdong 523863 (CN)
(74) Representative: Lavoix
(86) International application number: PCT/CN2022/142110
(87) International publication number: WO 2023/125458

(57) **Abstract**

This application discloses a communication method and apparatus, and a related device, pertaining to the field of communications technologies. The communication method in embodiments of this application includes: obtaining, by a first end, first information, where the first information is used for indicating at least one of the following: a function of an artificial intelligence AI model, input information of the AI model, and output information of the AI model; and performing, by the first end, a communication operation using an AI model based on the first information.

## Description

### CROSS-REFERENCE TO RELATED APPLICATIONS

This application claims priority to Chinese Patent Application No. 202111672336.9, filed in China on December 31, 2021, which is incorporated herein by reference in its entirety.

### TECHNICAL FIELD

This application pertains to the field of communications technologies, and specifically relates to a communication method and apparatus, and a related device.

### BACKGROUND

Artificial intelligence (Artificial Intelligence, AI) is a new technical science that studies and develops theories, methods, technologies, and application systems for simulating, extending, and expanding human intelligence, and has attracted widespread attention, seeing increasingly widespread application of AI. At present, in the field of communication technologies, the purpose, input format, and output format of the AI model are not yet clear, resulting in poor performance of the AI model during the communication process.

### SUMMARY

Embodiments of this application provide a communication method and apparatus, and a related device, which can resolve the problem of poor performance of an AI model in the existing communication process.

According to a first aspect, a communication method is provided, where the method includes:
obtaining, by a first end, first information, where the first information is used for indicating at least one of the following: a function of an artificial intelligence AI model, input information of the AI model, and output information of the AI model; and
performing, by the first end, a communication operation using an AI model based on the first information.

According to a second aspect, a communication apparatus is provided, including:
an obtaining module, configured to obtain first information, where the first information is used for indicating at least one of the following: a function of an artificial intelligence AI model, input information of the AI model, and output information of the AI model; and
an execution module, configured to perform a communication operation using an AI model based on the first information.

According to a third aspect, a terminal is provided, where the terminal includes a processor and a memory, and a program or instructions capable of running on the processor are stored in the memory. When the program or the instructions are executed by the processor, the steps of the communication method according to the first aspect are implemented.

According to a fourth aspect, a terminal is provided, including a processor and a communication interface. The processor is configured to obtain first information, and perform a communication operation using an AI model based on the first information, where the first information is used for indicating at least one of the following: a function of an artificial intelligence AI model, input information of the AI model, and output information of the AI model.

According to a fifth aspect, a network-side device is provided, where the network-side device includes a processor and a memory, and a program or instructions capable of running on the processor are stored in the memory. When the program or the instructions are executed by the processor, the steps of the communication method according to the first aspect are implemented.

According to a sixth aspect, a network-side device is provided, including a processor and a communication interface, where the processor is configured to obtain first information, and perform a communication operation using an AI model based on the first information, where the first information is used for indicating at least one of the following: a function of an artificial intelligence AI model, input information of the AI model, and output information of the AI model.

According to a seventh aspect, a readable storage medium is provided, where a program or instructions are stored in the readable storage medium, and when the program or the instructions are executed by a processor, the steps of the communication method according to the first aspect are implemented.

According to an eighth aspect, a chip is provided, where the chip includes a processor and a communication interface, the communication interface is coupled to the processor, and the processor is configured to run a program or instructions to implement the communication method according to the first aspect.

According to a ninth aspect, a computer program/program product is provided, where the computer program/program product is stored in a storage medium, and the computer program/program product is executed by at least one processor to implement the steps of the communication method according to the first aspect.

In the embodiments of this application, the function of the AI model, the input information of the AI model, and the output information of the AI model that are to be used by the first end during a communication operation are clarified, so as to avoid the problem that the AI model has poor performance due to an unclear function of the AI model or incorrect input information and output information of the AI model. This ensures that the AI model has relatively good performance in the communication process and also ensures that the first end can have relatively good communication performance.

### BRIEF DESCRIPTION OF DRAWINGS

FIG. 1 is a block diagram of a wireless communication system to which the embodiments of this application are applicable;
FIG. 2 is a flowchart of a communication method according to an embodiment of this application;
FIG. 3 is a structural diagram of a communication apparatus according to an embodiment of this application;
FIG. 4 is a structural diagram of a communication device according to an embodiment of this application;
FIG. 5 is a structural diagram of a terminal according to an embodiment of this application; and
FIG. 6 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

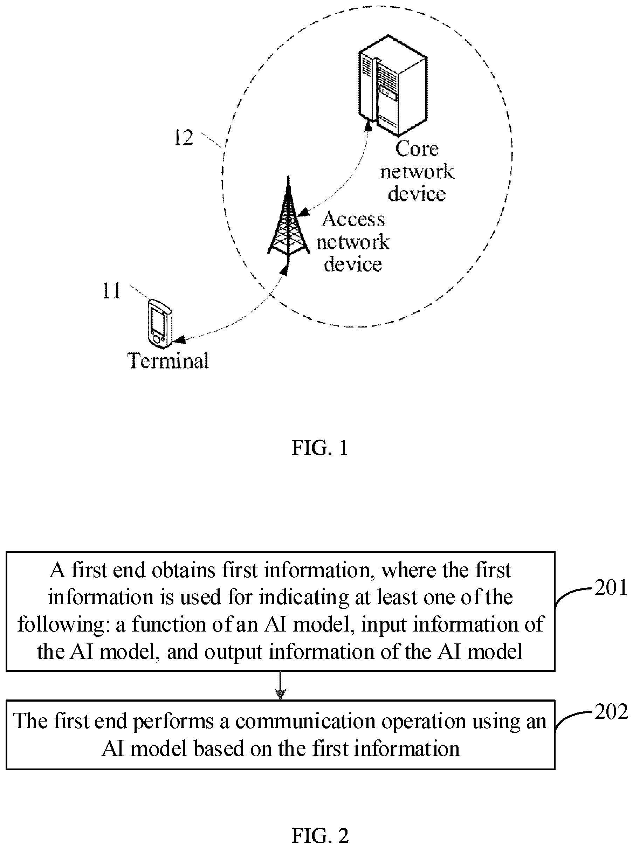

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration ( Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

The following describes in detail a communication method provided in the embodiments of this application by using some embodiments and application scenarios thereof with reference to the accompanying drawings.

Refer to FIG. 2. FIG. 2 is a flowchart of a communication method according to an embodiment of this application. As shown in FIG. 2, the communication method includes the following steps.

Step 201: A first end obtains first information, where the first information is used for indicating at least one of the following: a function of an AI model, input information of the AI model, and output information of the AI model.

Optionally, the first information is indication information sent by a second end, or the first information may be information specified in a protocol. For example, the first end receives first information sent by the second end, where the first information is used for indicating the function of the AI model.

Optionally, the first end is one of a terminal and a network-side device, and the second end is the other of the terminal and the network-side device. For example, the first end is a terminal and the second end is a network-side device; or the first end is a network-side device and the second end is a terminal. For example, the terminal sends first information to the network-side device, or the network-side device may send first information to the terminal.

Alternatively, the first end and the second end are different nodes of the terminal, for example, a first node of the terminal can send first information to a second node, or the second node can send first information to the first node.

Alternatively, the first end and the second end are different nodes of the network-side device, for example, a third node of the network-side device can send first information to a fourth node, or the fourth node may send first information to the third node.

In this embodiment of this application, the first information is used for indicating at least one of the following: a function of an artificial intelligence AI model, input information of the AI model, and output information of the AI model. Optionally, there may be an association between the function of the AI model and the input information and output information of the AI model. For example, the first information is merely used for indicating the function of the AI model, and during determining of the function of the AI model based on the first information, the first end can determine the input information and output information corresponding to the AI model based on the association. Alternatively, the first information is merely used for indicating the input information of the AI model, and the first end can determine the function of the AI model and the corresponding output information of the AI model based on the input information of the AI model. Alternatively, the first information is merely used for indicating the output information of the AI model, and the first end can determine the function of the AI model and the corresponding input information of the AI model based on the output information of the AI model. It can be understood that the first information can alternatively be used for indicating two or three of the function of the AI model, the input information of the AI model, and the output information of the AI model, which is not illustrated herein.

Step 202: The first end performs a communication operation using an AI model based on the first information.

In this embodiment of this application, after obtaining the first information, the first end can determine a to-be-used AI model based on content indicated by the first information, and can also determine the input information and output information of the AI model; then the first end performs a communication operation using the AI model.

It should be noted that the communication operation may refer to inputting the input information of the AI model into the AI model and/or performing processing on information output by the AI model, so as to meet a format or related requirements of the output information of the AI model. For example, if the first end is a terminal and the second end is a network-side device, and the network-side device can perform a communication operation based on the AI model, the network-side device determines the function of the AI model, the input information of the AI model, and the output information of the AI model, and the network-side device can send the first information to the terminal, so as to indicate the function of the AI model, the input information of the AI model, and the output information of the AI model. Further, based on the first information, the terminal can determine an AI model that needs to be used, and can perform information input to the AI model based on the input information of the AI model, and perform information output from the AI model based on the output information of the AI model, so that the terminal can align the function of the AI model and the input information and output information of the AI model with the network-side device during the communication operation using the AI model. This ensures the communication performance between the terminal and the network-side device, avoiding the problems of an unclear function of the AI model or incorrect input information and output information of the AI model, and guarantees the performance of the AI model in the communication process.

In this embodiment of this application, the function of the AI model, the input information of the AI model, and the output information of the AI model that are to be used by the first end during a communication operation are clarified, so as to avoid the problem that the AI model has poor performance due to an unclear function of the AI model or incorrect input information and output information of the AI model. This ensures that the AI model has relatively good performance in the communication process and also ensures that the first end can have relatively good communication performance.

Optionally, the function of the AI model includes at least one of the following: channel state information (Channel State Information, CSI) coding, CSI decoding, positioning, channel estimation, tracking reference signal (Tracking Reference Signal, TRS) estimation, phase tracking reference signal (Phase Tracking Reference Signal, PTRS) estimation, beam management, signal calibration, and digital pre-distortion (Digital Pre-Distortion, DPD).

For example, the first information is used for indicating that the function of the AI model is used for CSI coding, and the first end can perform a communication operation using an AI model for CSI coding based on the first information. Alternatively, the first information is used for indicating that the function of the AI model is used for CSI coding and channel estimation, and the first end performs a communication operation using an AI model for CSI coding and an AI model for channel estimation based on the first information. Optionally, the first information being used for indicating the function of the AI model may further include other possible cases, which are not listed here.

Optionally, the first information may be further used for indicating at least one of the following:
in a case that the function of the AI model is used for CSI coding, the input information of the AI model is a CSI reference signal;
in a case that the function of the AI model is used for CSI decoding, the input information of the AI model is at least one of a precoding matrix indicator (Precoding Matrix Indicator, PMI) and CSI coding information;
in a case that the function of the AI model is used for positioning, the input information of the AI model is at least one of a sounding reference signal (Sounding Reference Signal, SRS), a positioning reference signal (Positioning Reference Signal, PRS), and a CSI reference signal;
in a case that the function of the AI model is used for channel estimation, the input information of the AI model is a reference signal;
in a case that the function of the AI model is used for TRS estimation, the input information of the AI model is a TRS;
in a case that the function of the AI model is used for PTRS, the input information of the AI model is a PTRS;
in a case that the function of the AI model is used for beam management, the input information of the AI model is channel quality of a reference signal;
in a case that the function of the AI model is used for signal calibration, the input information of the AI model is a signal to be calibrated; and
in a case that the function of the AI model is used for DPD, the input information of the AI model is an original signal, where the original signal has not been digitally pre-distorted, and may be affected by nonlinear characteristics of an amplifier after passing through the amplifier.

For example, in a case that the function of the AI model is used for CSI coding, that is, the AI model that needs to be used by the first end is an AI model for CSI coding, and the first information is used for indicating that the input information of the AI model is a CSI reference signal. It should be noted that the function of the AI model being used for CSI coding may alternatively be indicated by the first information.

For another example, in a case that the function of the AI model is used for channel estimation, the first information is used for indicating that the input information of the AI model is a reference signal, for example, various types of reference signals such as a CSI reference signal, a demodulation reference signal (Demodulation Reference Signal, DMRS), or an SRS.

It should be noted that, in a case that the function of the AI model is used for beam management, the input information of the AI model is channel quality of various reference signals, for example, reference signal received power (Reference Signal Received Power, RSRP), reference signal received quality (Reference Signal Received Quality, RSRQ), and signal-to-noise and interference ratio (Signal-to-noise and Interference Ratio, SINR) of a reference signal such as a synchronization signal and physical broadcast channel signal block (Synchronization Signal and PBCH block, SSB), a CSI-RS, or an SRS. The channel quality further includes beam quality of layer 1 and/or beam quality of layer 3.

It can be understood that there is a corresponding association between the function of the AI model and the input information of the AI model, that is, in a case that the function of the AI model is determined, the corresponding input information of the AI model can be determined based on the function of the AI model. The first information being used for indicating the input information of the Al model may also be other possible cases, which will not be repeated here.

Optionally, the first information may be further used for indicating at least one of the following:
in a case that the function of the AI model is used for CSI coding, the output information of the AI model is at least one of a precoding matrix indicator PMI and CSI coding information;
in a case that the function of the AI model is used for CSI decoding, the output information of the AI model is at least one of CSI and channel related information obtained through CSI processing;
in a case that the function of the AI model is used for positioning, the output information of the AI model is at least one of location information and location related information in channel information;
in a case that the function of the AI model is used for channel estimation, the output information of the AI model is estimated channel information;
in a case that the function of the AI model is used for TRS estimation, the output information of the AI model is time information;
in a case that the function of the AI model is used for PTRS, the output information of the AI model is at least one of phase information and phase tracking information;
in a case that the function of the AI model is used for beam management, the output information of the AI model is at least one of a selected beam and beam quality of the selected beam;
in a case that the function of the AI model is used for signal calibration, the output information of the AI model is a calibrated signal; and
in a case that the function of the AI model is used for DPD, the output information of the AI model is a pre-distorted signal.

For example, in a case that the function of the AI model is used for CSI coding, the first information is used for indicating that the output information of the AI model is CSI and/or channel related information obtained through CSI processing. Optionally, the CSI may be a channel matrix, precoding information, channel quality, rank, and the like, and the channel related information obtained through CSI processing may be precoding information of multiple users or the like.

For another example, in a case that the function of the AI model is used for CSI coding, the first information is used for indicating that the output information of the AI model is location information and location related information in channel information. For example, the output information of the AI model may be timing time/timing (Timing), time of arrival (Timing of arrival, TOA), round-trip time (Round-Trip Time, RTT), observed time difference of arrival (Observed Time Difference of Arrival, OTDOA), time difference of arrival (Time Difference of Arrival, TDOA), angle of arrival (Angle of arrival, AOA), angle of departure (Angle of departure, AOD), or the like.

It should be noted that in a case that the function of the Al model is used for beam management, and the first information being used for indicating the output information of the AI model includes beam quality of the selected beam, the output information of the AI model may be beam quality of a current beam and/or beam quality of a future beam that may be selected.

In a case that the function of the AI model is used for DPD, the first information is used for indicating that the output information of the AI model is a pre-distorted signal to counter nonlinear distortion of other functional modules (such as a power amplifier module).

In this embodiment of this application, in a case that target information includes content of a plurality of domains, the first information is used for indicating that a format of the target information includes at least one of the following:
the content of the plurality of domains in the target information is arranged in a preset order; and
the content of the plurality of domains in the target information is converted into a corresponding matrix, where dimensions of the matrix matches the number of domains; where
the target information is the input information of the AI model or the output information of the AI model, and the content of the domain includes at least one of the following: domain resource, domain signal, and domain information.

For example, the target information is the input information of the AI model. If the input information of the AI model includes resources of a plurality of domains (such as time domain, frequency domain, and spatial domain), for example, two resources in time domain and two resources in frequency domain, the resources of the two domains included in the input information of the AI model can be arranged in a preset order. The preset order may be an order of cyclic hierarchy of different domains. For example, the input information of the AI model includes a first resource and a second resource in time domain and a first resource and a second resource in frequency domain; then, the order of the resources in the input information of AI model is: a frequency domain first resource on the first resource in time domain, a frequency domain second resource on the first resource in time domain, a frequency domain first resource on the second resource in time domain, and a frequency domain second resource on the second resource in time domain.

It should be noted that in a case that the target information is the output information of the AI model and the output information of the Al model includes the content of the plurality of domains, the content of the plurality of domains in the output information of the AI model may alternatively be arranged in a preset order, as described above, in the order of the cyclic hierarchy of different domains, which is not listed here. Optionally, the arrangement order of the content of the plurality of domains in the input information of the same AI model may be the same as the arrangement order of the content of the plurality of domains in the output information of the AI model, so as to ensure that the format of the input information of the same AI model is aligned with or matches the format of the output information.

Optionally, in a case that the target information includes the content of the plurality of domains, the first information is further used to indicate that the content of the plurality of domains in the target information is converted into a corresponding matrix, where dimensions of the matrix match the number of domains, and then the dimensions of the matrix are used to determine which dimension of the plurality of dimensions a domain in the target information belongs to.

For example, the target information is the input information of the AI model. If the input information of the AI model includes two domains, the input information of the AI model can be converted into a two-dimensional matrix, and the two dimensions of the matrix correspond to the two domains respectively. For another example, the target information is the output information of the AI model. If the output information of the AI model includes three domains, the output information of the AI model can be converted into a three-dimensional matrix, and the three dimensions of the matrix correspond to the three domains respectively.

In this embodiment of this application, in a case that the input information and/or output information of the AI model includes content of a plurality of domains, an input format and/or output format of the content of the plurality of domains in the input information and/or output information of the AI model is limited by the first information.

Optionally, in a case that the AI model includes a plurality of input interfaces, the first information is used for indicating input information corresponding to at least one of the input interfaces of the AI model; and/or, in a case that the AI model includes a plurality of output interfaces, the first information is used for indicating output information corresponding to at least one of the output interfaces of the AI model.

For example, if the AI model includes a plurality of input interfaces, the first information may be used for indicating input information corresponding to each interface of the AI model. Alternatively, in a case that the input interfaces of the AI model have no information input, the first information may not indicate the input information of these input interfaces. Alternatively, the first information indicates that at least one input interface of the AI model has no input information, or the first information indicates that at least one input interface of the AI model is closed. Optionally, one of the input interfaces may correspond to one type of input information, or one of the input interfaces may correspond to a plurality of types of input information, or a plurality of input interfaces may correspond to one type of input information.

For example, if the AI model includes a plurality of output interfaces, the first information may be used for indicating output information corresponding to each output interface of the AI model. Alternatively, in a case that the output interfaces of the AI model have no information output, the first information may not indicate the output information of these output interfaces. Alternatively, the first information indicates that at least one output interface of the AI model has no output information, or the first information indicates that at least one output interface of the AI model is closed. Optionally, one of the output interfaces may correspond to one type of output information, or one of the output interfaces may correspond to a plurality of types of output information, or a plurality of output interfaces may correspond to one type of output information.

In this embodiment of this application, in a case that the first information is used for indicating the input information of the AI model, the first information is further used to indicate whether the input information of the AI model needs preprocessing; and/or
in a case that the first information is used for indicating the output information of the AI model, the first information is further used to indicate whether the output information of the AI model needs post-processing.

The preprocessing may refer to processing performed before the input information is input into the AI model, and the post-processing may refer to processing performed after the output information of the AI model is output.

Optionally, the preprocessing or post-processing includes at least one of transform domain processing, power processing, amplitude processing, and phase processing.

The transform domain processing may include Fourier transform, Fast Fourier Transform (Fast Fourier Transform, FFT), discrete Fourier transform, fractional Fourier transform, short-time Fourier transform, Laplace transform (Laplace transform), Z transform, wavelet transform, discrete wavelet transform, and continuous wavelet transform; or may include inverse Fourier transform, inverse fast Fourier transform, inverse discrete Fourier transform, inverse fractional Fourier transform, inverse short-time Fourier transform, inverse Laplace transform (Laplace transform), inverse Z transform, inverse wavelet transform, inverse discrete wavelet transform, and inverse continuous wavelet transform.

Optionally, the power processing may be to perform resource group division for the input information of the AI model and/or the output information of the AI model, and the total power of each resource group is processed as a fixed value. For example, using the input information of the AI model as an example, and assuming that the input information of the AI model includes time domain and frequency domain, division is performed based on orthogonal frequency division multiplex (Orthogonal Frequency Division Multiplex, OFDM) symbols in time domain for the input information of the AI model, and the total power of all frequency domain resource blocks (Resource Block, RB) or subbands on each OFDM symbol obtained through division is normalized to a fixed value.

Alternatively, after resource group division is performed for the input information of the AI model and/or the output information of the AI model, the power processing can also be performed by using one of the divided resource groups as a target resource group and normalizing the total power of each of other resource groups. For example, the total power of each resource group after power processing is equal to the total power of the resource group before processing divided by the total power of the target resource group.

It should be noted that for the amplitude processing manner, reference may be made to the power processing.

Optionally, the phase processing may be phase normalization processing. For example, resource group division is performed for the input information of the AI model and/or the output information of the AI model, one of the divided resource groups is used as the target resource group, and a phase of each of other resource groups is normalized based on the target resource group.

In this embodiment of this application, the input information of the AI model and/or the output information of the AI model further includes preset information, and the preset information includes at least one of channel environment information and device information.

Optionally, the channel environment information includes timing information, signal-to-noise ratio, noise information, interference information, moving performance, moving speed, moving direction, beam quality, channel quality, location of the first end, and the like.

In a case that the first end is a terminal, the device information may include terminal type, terminal identity (Identity, ID), cell ID, terminal status, and so on. The terminal status includes an idle state, an inactive state, and a connected state.

Optionally, the preset information may be a separate indication independent of the first information. In this embodiment of this application, the method further includes the following step:
obtaining, by the first end, second information, where the second information is used for indicating at least one of the following: the preset information and a format of the preset information.

For example, the first end may obtain the second information before obtaining the first information, or may obtain the second information after obtaining the first information, or obtain them at the same time. The second information is used for indicating the preset information and/or a format of the preset information. The format of the preset information may refer to a specific type of preset information. For example, the second information is used for indicating that the format of the preset information is beam quality, and the input information of the AI model and/or the output information of the AI model may also include beam quality.

Optionally, the method further includes at least one of the following:
before the first end performs information input on the AI model based on the first information, applying the preset information to the input information of the AI model; and
after the first end performs information output on the AI model based on the first information, applying the preset information to the output information of the Al model.

In this embodiment of this application, in a case that the first information is obtained, the first end can determine an AI model to be used, and at least one of the function of the AI model, the input information of the AI model, and the output information of the AI model. Before performing information input for the AI model, the first end applies the channel environment information and device information to the input information of the AI model, and then performs the information input for the AI model, for example, the input information input into the AI module further includes the channel environment information and device information. Applying the preset information to the input information of the AI model in advance can avoid affecting the format of the output information of the AI model.

For example, after performing information output for the AI model, the first end may alternatively apply the preset information to the output information of the AI model, for example, the output information of the AI model includes the preset information. Then the output information of the AI model including the preset information is sent to a next function module, so as to avoid affecting the format of the output information of the AI model.

In this embodiment of this application, the input information of the AI model and/or the output information of the AI model may also have missing partial information. Optionally, in a case that there is a missing part in the target information, before the first operation is performed by the first end, the method further includes:
performing, by the first end, at least one of the following:
supplementing the missing part based on a default value; and
supplementing the missing part based on adjacent information of the target information; where
the target information is at least one of the input information of the AI model and the output information of the AI model; in a case that the target information is the input information of the AI model, the adjacent information is input information adjacent to the input information of the AI model; and in a case that the target information is the output information of the AI model, the adjacent information is output information adjacent to the output information of the AI model.

For example, using an example where the target information is the input information of the AI model, if there is a missing part in the input information of the AI model, the missing part of the input information of the AI model can be supplemented based on a default value, for example, the missing part is defaulted as a constant. Alternatively, the missing part may be supplemented with input information adjacent to the input information of the AI model, for example, based on previous input information of the input information of the AI model. Alternatively, the missing part may be supplemented by a plurality of input information adjacent to the input information of the Al model, for example, a linear average of the first three pieces of input information in the input information of the AI model is calculated, and the missing part is supplemented based on the linear average.

It should be noted that in a case that the output information of the AI model includes a missing part, the missing part can also be supplemented based on the foregoing manner, which is not specifically described in detail here.

Optionally, the first information obtained by the first end further includes at least one of a calibration set and an error of the calibration set, and before the communication operation is performed using the AI model, the method further includes:
performing, by the first end, processing on target information based on the first information, where the processed target information meets the error of the calibration set; where
the target information is at least one of the input information of the AI model and the output information of the AI model.

Optionally, the calibration set is a set of input information and output information used for information format calibration, where the input information of information format calibration is in one-to-one correspondence to the format of the input information of the AI model, and/or the output information of information format calibration is in one-to-one correspondence to the format of the output information of the AI model. For example, the AI model is used for CSI coding. An input information format for information format calibration is a two-dimensional matrix; a first dimension is spatial domain, 32 elements represent 32 antennas of a base station, a second dimension is frequency domain, and 13 elements represent 13 subbands. The input information of the AI model is a CSI reference signal, the format is a two-dimensional matrix, a first dimension is 32 elements in spatial domain, a second dimension is 13 elements in frequency domain, and the formats of the two are in one-to-one correspondence to each other. The first end can determine at least one of the calibration set and the error of the calibration set based on the first information, and the first end can arbitrarily perform processing on the input information and/or the output information of the AI model, and an error for the processed input information of the AI model and/or the processed output information of the AI model is smaller than the error of the calibration set.

For example, using the target information being the input information of the AI model as an example, if the first information indicates that the error of the calibration set is a preset threshold, the first end performs processing on the input information of the AI model based on the first information and inputs it into the AI model to obtain the output information of the AI model, and compares the output information of the AI model with the corresponding output information in the calibration set to obtain an error. If the error is less than or equal to the preset threshold, it is considered that the processing on the input information of the AI model by the first end satisfies the error of the calibration set, and if the error is greater than the preset threshold, it is considered that the processing on the input information of the AI model by the first end does not satisfy the error of the calibration set.

Optionally, the performing the communication operation using the AI model includes:
performing a communication operation on the processed target information by using the AI model, where information output by the AI model meets the error of the calibration set.

For example, if the target information is the input information of the Al model, the communication operation is that the first end arbitrarily performs processing on the input information of the AI model and then inputs it into the AI model, and the information output by the AI model meets the error of the calibration set. If the target information is the output information of the AI model, the communication operation is as follows: after arbitrarily processing the output information of the AI model, the first end uses the processed output information of the AI model as the output information of the AI model, and the output information of the AI model meets the error of the calibration set.

In this embodiment of this application, the first information can indicate the calibration set and/or the error of the calibration set, and then the first end can arbitrarily perform processing on the input information of the AI model and/or the output information of the AI model using the AI model during the communication process to ensure that the processed input information and/or the output information of the AI model meets the error of the calibration set.

For the communication method provided in the embodiments of this application, the execution subject can be a communication apparatus. In the embodiments of this application, the communication method being performed by the communication apparatus is used as an example to describe the communication apparatus provided in the embodiments of this application.

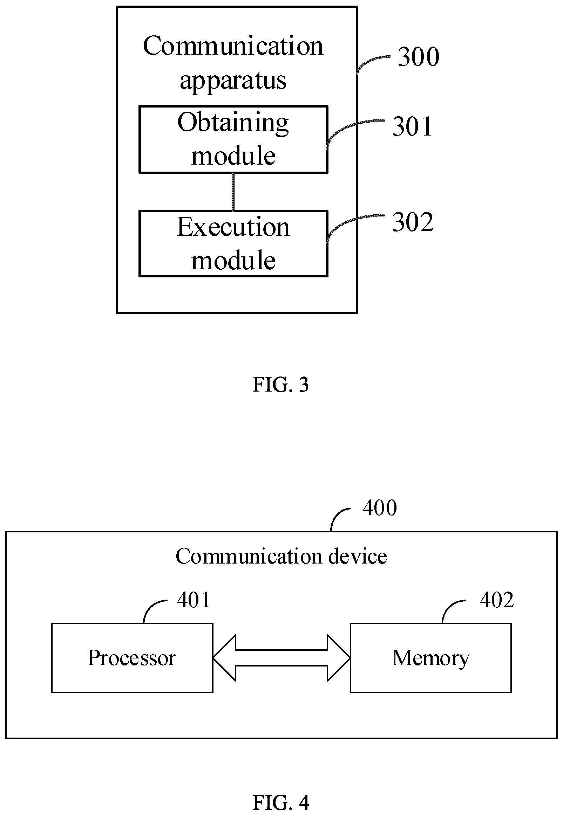

Refer to FIG. 3. FIG. 3 is a structural diagram of a communication apparatus according to an embodiment of this application. As shown in FIG. 3, the communication apparatus 300 includes:
an obtaining module 301, configured to obtain first information, where the first information is used for indicating at least one of the following: a function of an artificial intelligence AI model, input information of the AI model, and output information of the AI model; and
an execution module 302, configured to perform a communication operation using an AI model based on the first information.

Optionally, the function of the AI model includes at least one of the following: channel state information CSI coding, CSI decoding, positioning, channel estimation, tracking reference signal TRS estimation, phase tracking reference information PTRS estimation, beam management, signal calibration, and digital predistortion DPD.

Optionally, the first information is used for indicating at least one of the following:
in a case that the function of the AI model is used for CSI coding, the input information of the AI model is a CSI reference signal;
in a case that the function of the AI model is used for CSI decoding, the input information of the AI model is at least one of a precoding matrix indicator PMI and CSI coding information;
in a case that the function of the AI model is used for positioning, the input information of the AI model is at least one of a sounding reference signal SRS, a positioning reference signal PRS, and a CSI reference signal;
in a case that the function of the AI model is used for channel estimation, the input information of the AI model is a reference signal;
in a case that the function of the AI model is used for TRS estimation, the input information of the AI model is a TRS;
in a case that the function of the AI model is used for PTRS, the input information of the AI model is a PTRS;
in a case that the function of the AI model is used for beam management, the input information of the AI model is channel quality of a reference signal;
in a case that the function of the AI model is used for signal calibration, the input information of the AI model is a signal to be calibrated; and
in a case that the function of the AI model is used for DPD, the input information of the AI model is an original signal.

Optionally, the first information is used for indicating at least one of the following:
in a case that the function of the AI model is used for CSI coding, the output information of the AI model is at least one of a precoding matrix indicator PMI and CSI coding information;
in a case that the function of the AI model is used for CSI decoding, the output information of the AI model is at least one of CSI and channel related information obtained through CSI processing;
in a case that the function of the AI model is used for positioning, the output information of the AI model is at least one of location information and location related information in channel information;
in a case that the function of the AI model is used for channel estimation, the output information of the AI model is estimated channel information;
in a case that the function of the AI model is used for TRS estimation, the output information of the AI model is time information;
in a case that the function of the AI model is used for PTRS, the output information of the AI model is at least one of phase information and phase tracking information;
in a case that the function of the AI model is used for beam management, the output information of the AI model is at least one of a selected beam and beam quality of the selected beam;
in a case that the function of the AI model is used for signal calibration, the output information of the AI model is a calibrated signal; and
in a case that the function of the AI model is used for DPD, the output information of the AI model is a pre-distorted signal.

Optionally, in a case that target information includes content of a plurality of domains, the first information is used for indicating that a format of the target information includes at least one of the following:
the content of the plurality of domains in the target information is arranged in a preset order; and
the content of the plurality of domains in the target information is converted into a corresponding matrix, where dimensions of the matrix matches the number of domains; where
the target information is the input information of the AI model or the output information of the AI model, and the content of the domain includes at least one of the following: domain resource, domain signal, and domain information.

Optionally, in a case that the AI model includes a plurality of input interfaces, the first information is used for indicating input information corresponding to at least one of the input interfaces of the AI model; and/or
in a case that the AI model includes a plurality of output interfaces, the first information is used for indicating output information corresponding to at least one of the output interfaces of the AI model.
in a case that the first information is used for indicating the input information of the AI model, the first information is further used to indicate whether the input information of the AI model needs preprocessing; and/or
in a case that the first information is used for indicating the output information of the AI model, the first information is further used to indicate whether the output information of the AI model needs post-processing.

Optionally, the preprocessing or post-processing includes at least one of transform domain processing, power processing, amplitude processing, and phase processing.

Optionally, the input information of the AI model and/or the output information of the AI model further includes preset information, and the preset information includes at least one of channel environment information and device information.

Optionally, the obtaining module 301 is further configured to:
obtain second information, where the second information is used for indicating at least one of the following: the preset information and a format of the preset information.

Optionally, the execution module 302 is further configured to perform at least one of the following:
before the apparatus performs information input on the AI model based on the first information, apply the preset information to the input information of the AI model; and
after the apparatus performs information output on the AI model based on the first information, apply the preset information to the output information of the AI model.

Optionally, in a case that there is a missing part in the target information, the execution module 302 is further configured to perform at least one of the following:
supplementing the missing part based on a default value; and
supplementing the missing part based on adjacent information of the target information; where
the target information is at least one of the input information of the AI model and the output information of the AI model; in a case that the target information is the input information of the AI model, the adjacent information is input information adjacent to the input information of the AI model; and in a case that the target information is the output information of the AI model, the adjacent information is output information adjacent to the output information of the AI model.

Optionally, the first information further includes at least one of a calibration set and an error of the calibration set, and the execution module 302 is further configured to:
perform processing on target information based on the first information, where the processed target information meets the error of the calibration set; where
the target information is at least one of the input information of the AI model and the output information of the AI model.

Optionally, the execution module 302 is further configured to:
perform a communication operation on the processed target information by using the AI model, where information output by the AI model meets the error of the calibration set.

Optionally, in a case that the apparatus is a first end, the first information is indication information sent by a second end, or the first information is information specified in a protocol.

Optionally, the apparatus is one of a terminal and a network-side device, and the second end is the other of the terminal and the network-side device; or
the apparatus and the second end are different nodes of the terminal; or

The apparatus and the second end are different nodes of the network-side device.

In this embodiment of this application, the function of the AI model, the input information of the AI model, and the output information of the AI model that are to be used by the communication apparatus 300 during a communication operation are clarified, so as to avoid the problem that the AI model has poor performance due to an unclear function of the AI model or incorrect input information and output information of the AI model. This ensures that the AI model has relatively good performance in the communication process and also ensures that the communication apparatus 300 can have relatively good communication performance.

The communication apparatus 300 in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The communication apparatus 300 provided in this embodiment of this application is capable of implementing the processes implemented in the communication method embodiment shown in FIG. 2, with the same technical effects achieved. To avoid repetition, details are not described herein again.

Optionally, as shown in FIG. 4, an embodiment of this application further provides a communication device 400, including a processor 401, a memory 402, and a program or instructions stored in the memory 402 and capable of running on the processor 401. For example, when the communication device 400 is a terminal and when the program or the instructions are executed by the processor 401, the steps of the foregoing embodiments of the communication method shown in FIG. 2 are implemented, with the same technical effects achieved. When the communication device 400 is a network-side device and when the program or the instructions are executed by the processor 401, the steps of the foregoing embodiments of the communication method shown in FIG. 2 are implemented, with the same technical effects achieved. To avoid repetition, details are not described herein again.

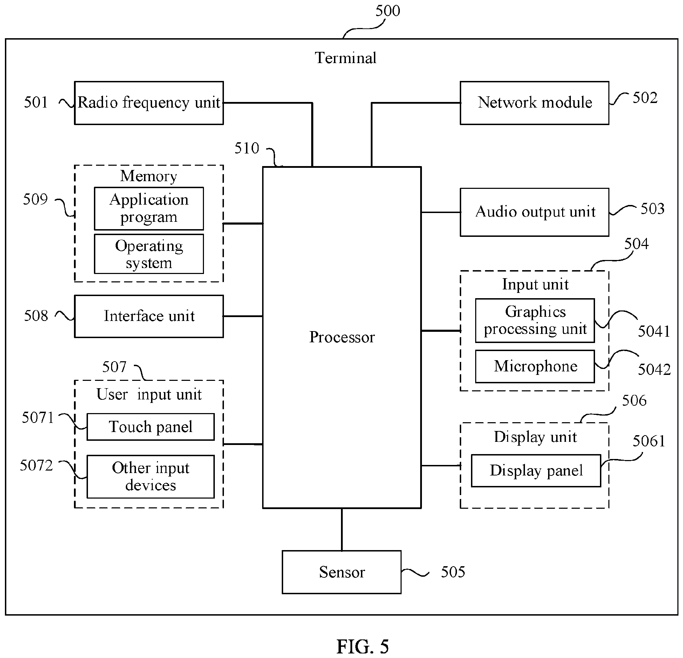

An embodiment of this application further provides a terminal, including a processor and a communication interface, where the processor is used for obtaining first information, and performing a communication operation based on the first information using an AI model. The terminal embodiments correspond to the foregoing terminal-side method embodiments, and the implementation processes and implementations of the foregoing method embodiments can be applied to the terminal embodiments, with the same technical effects achieved. Specifically, FIG. 5 is a schematic diagram of a hardware structure of a terminal for implementing the embodiments of this application.

The terminal 500 includes but is not limited to at least part of components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, a battery) supplying power to the components, and the power supply may be logically connected to the processor 510 through a power management system. In this way, functions such as charge management, discharge management, and power consumption management are implemented by using the power management system. The structure of the terminal shown in FIG. 5 does not constitute any limitation on the terminal. The terminal may include more or fewer components than shown in the figure, or a combination of some components, or the components disposed differently. Details are not described herein again.

It can be understood that in this embodiment of this application, the input unit 504 may include a graphics processing unit (Graphics Processing Unit, GPU) 5041 and a microphone 5042. The graphics processing unit 5041 processes image data of a still picture or video obtained by an image capture apparatus (such as a camera) in a video capture mode or an image capture mode. The display unit 506 may include a display panel 5061, and the display panel 5061 may be configured in a form of a liquid crystal display, an organic light-emitting diode, and the like. The user input unit 507 may include at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function key (such as a volume control key or a power on/off key), a trackball, a mouse, a joystick, and the like. Details are not described herein.

In this embodiment of this application, the radio frequency unit 501 receives downlink data from a network-side device, and then sends the downlink data to the processor 510 for processing. In addition, the radio frequency unit 501 may sends uplink data to the network-side device. Generally, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may include a first storage area for storing a program or instructions and a second storage area for storing data. The first storage area may store an operating system, an application program or instruction required by at least one function (for example, a sound playback function or an image playback function), and the like. In addition, the memory 509 may include a volatile memory or a non-volatile memory, or the memory 509 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 509 in the embodiments of this application includes but is not limited to these and any other suitable types of memories.

The processor 510 may include one or more processing units. Optionally, an application processor and a modem processor may be integrated in the processor 510. This application processor primarily processes operations involving an operating system, user interfaces, application programs, and the like. The modem processor primarily processes radio communication signals, for example, being a baseband processor. It can be understood that the modem processor may alternatively be not integrated in the processor 510.

The processor 510 is configured to:
obtain first information, where the first information is used for indicating at least one of the following: a function of an artificial intelligence AI model, input information of the AI model, and output information of the AI model; and
perform a communication operation using an AI model based on the first information.

Optionally, the function of the AI model includes at least one of the following: channel state information CSI coding, CSI decoding, positioning, channel estimation, tracking reference signal TRS estimation, phase tracking reference information PTRS estimation, beam management, signal calibration, and digital predistortion DPD.

Optionally, the first information is used for indicating at least one of the following:
in a case that the function of the AI model is used for CSI coding, the input information of the AI model is a CSI reference signal;
in a case that the function of the AI model is used for CSI decoding, the input information of the AI model is at least one of a precoding matrix indicator PMI and CSI coding information;
in a case that the function of the AI model is used for positioning, the input information of the AI model is at least one of a sounding reference signal SRS, a positioning reference signal PRS, and a CSI reference signal;
in a case that the function of the AI model is used for channel estimation, the input information of the AI model is a reference signal;
in a case that the function of the AI model is used for TRS estimation, the input information of the AI model is a TRS;
in a case that the function of the AI model is used for PTRS, the input information of the AI model is a PTRS;
in a case that the function of the AI model is used for beam management, the input information of the AI model is channel quality of a reference signal;
in a case that the function of the AI model is used for signal calibration, the input information of the AI model is a signal to be calibrated; and
in a case that the function of the AI model is used for DPD, the input information of the AI model is an original signal.

Optionally, the first information is used for indicating at least one of the following:
in a case that the function of the AI model is used for CSI coding, the output information of the AI model is at least one of a precoding matrix indicator PMI and CSI coding information;
in a case that the function of the AI model is used for CSI decoding, the output information of the AI model is at least one of CSI and channel related information obtained through CSI processing;
in a case that the function of the AI model is used for positioning, the output information of the AI model is at least one of location information and location related information in channel information;
in a case that the function of the AI model is used for channel estimation, the output information of the AI model is estimated channel information;
in a case that the function of the AI model is used for TRS estimation, the output information of the AI model is time information;
in a case that the function of the AI model is used for PTRS, the output information of the AI model is at least one of phase information and phase tracking information;
in a case that the function of the AI model is used for beam management, the output information of the AI model is at least one of a selected beam and beam quality of the selected beam;
in a case that the function of the AI model is used for signal calibration, the output information of the AI model is a calibrated signal; and
in a case that the function of the AI model is used for DPD, the output information of the AI model is a pre-distorted signal.

Optionally, in a case that target information includes content of a plurality of domains, the first information is used for indicating that a format of the target information includes at least one of the following:
the content of the plurality of domains in the target information is arranged in a preset order; and
the content of the plurality of domains in the target information is converted into a corresponding matrix, where dimensions of the matrix matches the number of domains; where
the target information is the input information of the AI model or the output information of the AI model, and the content of the domain includes at least one of the following: domain resource, domain signal, and domain information.

Optionally, in a case that the AI model includes a plurality of input interfaces, the first information is used for indicating input information corresponding to at least one of the input interfaces of the AI model; and/or
in a case that the AI model includes a plurality of output interfaces, the first information is used for indicating output information corresponding to at least one of the output interfaces of the AI model.
in a case that the first information is used for indicating the input information of the AI model, the first information is further used to indicate whether the input information of the AI model needs preprocessing; and/or
in a case that the first information is used for indicating the output information of the AI model, the first information is further used to indicate whether the output information of the AI model needs post-processing.

Optionally, the preprocessing or post-processing includes at least one of transform domain processing, power processing, amplitude processing, and phase processing.

Optionally, the input information of the AI model and/or the output information of the AI model further includes preset information, and the preset information includes at least one of channel environment information and device information.

Optionally, the processor 510 is further configured to:
obtain second information, where the second information is used for indicating at least one of the following: the preset information and a format of the preset information.

Optionally, the processor 510 is configured to perform at least one of the following:
before the terminal 500 performs information input on the AI model based on the first information, applying the preset information to the input information of the AI model; and
after the terminal 500 performs information output on the AI model based on the first information, applying the preset information to the output information of the AI model.

Optionally, in a case that there is a missing part in the target information, the processor 510 is further configured to perform at least one of the following:
supplementing the missing part based on a default value; and
supplementing the missing part based on adjacent information of the target information; where
the target information is at least one of the input information of the AI model and the output information of the AI model; in a case that the target information is the input information of the AI model, the adjacent information is input information adjacent to the input information of the AI model; and in a case that the target information is the output information of the AI model, the adjacent information is output information adjacent to the output information of the AI model.

Optionally, the first information further includes at least one of a calibration set and an error of the calibration set, and the processor 510 is further configured to:
perform processing on target information based on the first information, where the processed target information meets the error of the calibration set; where
the target information is at least one of the input information of the AI model and the output information of the AI model.

Optionally, the processor 510 is further configured to:
perform a communication operation on the processed target information by using the AI model, where information output by the AI model meets the error of the calibration set.

Optionally, the first information is indication information sent by a second end, or the first information is information specified in a protocol.

Optionally, the second end is a network-side device; or
the second end is a node of a terminal.

In this embodiment of this application, the function of the AI model, the input information of the AI model, and the output information of the AI model that are to be used by the terminal during a communication operation are clarified, so as to avoid the problem that the AI model has poor performance due to an unclear function of the AI model or incorrect input information and output information of the AI model. This ensures that the AI model has relatively good performance in the communication process and also ensures that the terminal can have relatively good communication performance.

An embodiment of this application further provides a network-side device, including a processor and a communication interface, where the processor is configured to obtain first information, and perform a communication operation using an AI model based on the first information, where the first information is used for indicating at least one of the following: a function of an artificial intelligence AI model, input information of the AI model, and output information of the AI model. The network-side device embodiments correspond to the foregoing network-side device method embodiments shown in FIG. 2, and the implementation processes and implementations of the foregoing method embodiments can be applied to the network-side device embodiments, with the same technical effects achieved.

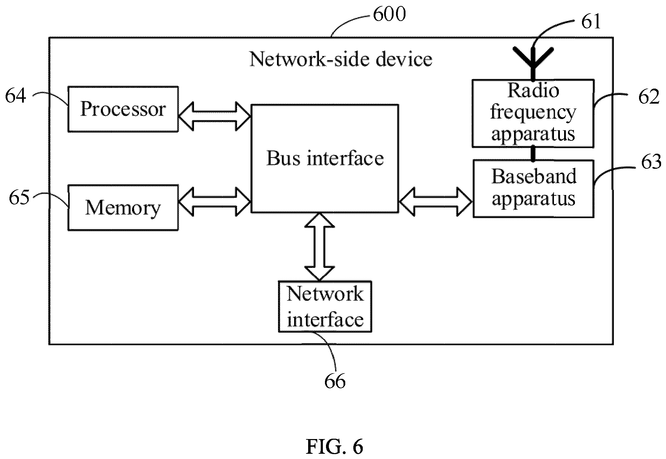

Specifically, an embodiment of this application further provides a network-side device. As shown in FIG. 6, the network-side device 600 includes an antenna 61, a radio frequency apparatus 62, a baseband apparatus 63, a processor 64, and a memory 65. The antenna 61 is connected to the radio frequency apparatus 62. In an uplink direction, the radio frequency apparatus 62 receives information by using the antenna 61, and sends the received information to the baseband apparatus 63 for processing. In a downlink direction, the baseband apparatus 63 processes to-be-sent information, and sends the information to the radio frequency apparatus 62; and the radio frequency apparatus 62 processes the received information and then sends the information out by using the antenna 61.

The method executed by the network-side device in the foregoing embodiments can be implemented in the baseband apparatus 63, and the baseband apparatus 63 includes a baseband processor.

The baseband apparatus 63 may include, for example, at least one baseband board, where a plurality of chips are disposed on the baseband board. As shown in FIG. 6, one of the chips is, for example, a baseband processor, and is connected to the memory 65 through the bus interface, to invoke a program in the memory 65 to perform the operations of the network device shown in the foregoing method embodiments.

The network-side device may further include a network interface 66, where the interface is, for example, a common public radio interface (Common Public Radio Interface, CPRI).

Specifically, the network-side device 600 in this embodiment of this application further includes: instructions or a program stored in the memory 65 and capable of running on the processor 64. The processor 64 invokes the instructions or program in the memory 65 to execute the method executed by the modules shown in FIG. 3, with the same technical effects achieved. To avoid repetition, details are not repeated herein.

An embodiment of this application further provides a readable storage medium, where a program or an instruction is stored in the readable storage medium. When the program or the instruction is executed by a processor, the processes of the foregoing communication method embodiments shown in FIG. 2 are implemented, with the same technical effects achieved. To avoid repetition, details are not described herein again.

The processor is a processor in the terminal described in the foregoing embodiments. The readable storage medium includes a computer-readable storage medium, for example, a computer read only memory, a random access memory, a magnetic disk, or an optical disc.

An embodiment of this application further provides a chip, where the chip includes a processor and a communication interface. The communication interface is coupled to the processor, and the processor is configured to run a program or an instruction to implement the processes of the foregoing communication method embodiments in FIG. 2, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing communication method embodiments in FIG. 2, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A communication method, comprising:
obtaining, by a first end, first information, wherein the first information is used for indicating at least one of the following: a function of an artificial intelligence AI model, input information of the AI model, and output information of the AI model; and
performing, by the first end, a communication operation using an AI model based on the first information.

2. The method according to claim 1, wherein the function of the AI model comprises at least one of the following: channel state information CSI coding, CSI decoding, positioning, channel estimation, tracking reference signal TRS estimation, phase tracking reference information PTRS estimation, beam management, signal calibration, and digital predistortion DPD.

3. The method according to claim 1, wherein the first information is used for indicating at least one of the following:
in a case that the function of the AI model is used for CSI coding, the input information of the AI model is a CSI reference signal;
in a case that the function of the AI model is used for CSI decoding, the input information of the AI model is at least one of a precoding matrix indicator PMI and CSI coding information;
in a case that the function of the AI model is used for positioning, the input information of the AI model is at least one of a sounding reference signal SRS, a positioning reference signal PRS, and a CSI reference signal;
in a case that the function of the AI model is used for channel estimation, the input information of the AI model is a reference signal;
in a case that the function of the AI model is used for TRS estimation, the input information of the AI model is a TRS;
in a case that the function of the AI model is used for PTRS, the input information of the AI model is a PTRS;
in a case that the function of the AI model is used for beam management, the input information of the AI model is channel quality of a reference signal;
in a case that the function of the AI model is used for signal calibration, the input information of the AI model is a signal to be calibrated; and
in a case that the function of the AI model is used for DPD, the input information of the AI model is an original signal.

4. The method according to claim 1, wherein the first information is used for indicating at least one of the following:
in a case that the function of the AI model is used for CSI coding, the output information of the AI model is at least one of a precoding matrix indicator PMI and CSI coding information;
in a case that the function of the AI model is used for CSI decoding, the output information of the AI model is at least one of CSI and channel related information obtained through CSI processing;
in a case that the function of the AI model is used for positioning, the output information of the AI model is at least one of location information and location related information in channel information;
in a case that the function of the AI model is used for channel estimation, the output information of the AI model is estimated channel information;
in a case that the function of the AI model is used for TRS estimation, the output information of the AI model is time information;
in a case that the function of the AI model is used for PTRS, the output information of the AI model is at least one of phase information and phase tracking information;
in a case that the function of the AI model is used for beam management, the output information of the AI model is at least one of a selected beam and beam quality of the selected beam;
in a case that the function of the AI model is used for signal calibration, the output information of the AI model is a calibrated signal; and
in a case that the function of the AI model is used for DPD, the output information of the AI model is a pre-distorted signal.

5. The method according to claim 1, wherein in a case that target information comprises content of a plurality of domains, the first information is used for indicating that a format of the target information comprises at least one of the following:
the content of the plurality of domains in the target information is arranged in a preset order; and
the content of the plurality of domains in the target information is converted into a corresponding matrix, wherein dimensions of the matrix matches the number of domains; wherein
the target information is the input information of the AI model or the output information of the AI model, and the content of the domain comprises at least one of the following: domain resource, domain signal, and domain information.

6. The method according to claim 1, wherein in a case that the AI model comprises a plurality of input interfaces, the first information is used for indicating input information corresponding to at least one of the input interfaces of the AI model; and/or
in a case that the AI model comprises a plurality of output interfaces, the first information is used for indicating output information corresponding to at least one of the output interfaces of the AI model.

7. The method according to claim 1, wherein in a case that the first information is used for indicating the input information of the AI model, the first information is further used to indicate whether the input information of the AI model needs preprocessing; and/or
in a case that the first information is used for indicating the output information of the AI model, the first information is further used to indicate whether the output information of the AI model needs post-processing.

8. The method according to claim 7, wherein the preprocessing or post-processing comprises at least one of transform domain processing, power processing, amplitude processing, and phase processing.

9. The method according to claim 1, wherein the input information of the AI model and/or the output information of the AI model further comprises preset information, and the preset information comprises at least one of channel environment information and device information.

10. The method according to claim 9, wherein the method further comprises:
obtaining, by the first end, second information, wherein the second information is used for indicating at least one of the following: the preset information and a format of the preset information.

11. The method according to claim 9, wherein the method further comprises at least one of the following:
before the first end performs information input on the AI model based on the first information, applying the preset information to the input information of the AI model; and
after the first end performs information output on the AI model based on the first information, applying the preset information to the output information of the AI model.

12. The method according to claim 1, wherein in a case that there is a missing part in the target information, before the first end performs a first operation, the method further comprises:
performing, by the first end, at least one of the following:
supplementing the missing part based on a default value; and
supplementing the missing part based on adjacent information of the target information; wherein
the target information is at least one of the input information of the AI model and the output information of the AI model; in a case that the target information is the input information of the AI model, the adjacent information is input information adjacent to the input information of the AI model; and in a case that the target information is the output information of the AI model, the adjacent information is output information adjacent to the output information of the AI model.

13. The method according to claim 1, wherein the first information further comprises at least one of a calibration set and an error of the calibration set, and before the performing a communication operation using an AI model, the method further comprises:
performing, by the first end, processing on target information based on the first information, wherein the processed target information meets the error of the calibration set; wherein
the target information is at least one of the input information of the AI model and the output information of the AI model.

14. The method according to claim 13, wherein the performing a communication operation using an AI model comprises:
performing a communication operation on the processed target information by using the AI model, wherein information output by the AI model meets the error of the calibration set.

15. The method according to claim 1, wherein the first information is indication information sent by a second end, or the first information is information specified in a protocol.

16. The method according to claim 15, wherein the first end is one of a terminal and a network-side device, and the second end is the other of the terminal and the network-side device; or
the first end and the second end are different nodes of the terminal; or
the first end and the second end are different nodes of the network-side device.

17. A communication apparatus, comprising:
an obtaining module, configured to obtain first information, wherein the first information is used for indicating at least one of the following: a function of an artificial intelligence AI model, input information of the AI model, and output information of the AI model; and
an execution module, configured to perform a communication operation using an AI model based on the first information.

18. The apparatus according to claim 17, wherein the function of the AI model comprises at least one of the following: channel state information CSI coding, CSI decoding, positioning, channel estimation, tracking reference signal TRS estimation, phase tracking reference information PTRS estimation, beam management, signal calibration, and digital predistortion DPD.

19. The apparatus according to claim 17, wherein the first information is used for indicating at least one of the following:
in a case that the function of the AI model is used for CSI coding, the input information of the AI model is a CSI reference signal;
in a case that the function of the AI model is used for CSI decoding, the input information of the AI model is at least one of a precoding matrix indicator PMI and CSI coding information;
in a case that the function of the AI model is used for positioning, the input information of the AI model is at least one of a sounding reference signal SRS, a positioning reference signal PRS, and a CSI reference signal;
in a case that the function of the AI model is used for channel estimation, the input information of the AI model is a reference signal;
in a case that the function of the AI model is used for TRS estimation, the input information of the AI model is a TRS;
in a case that the function of the AI model is used for PTRS, the input information of the AI model is a PTRS;
in a case that the function of the AI model is used for beam management, the input information of the AI model is channel quality of a reference signal;
in a case that the function of the AI model is used for signal calibration, the input information of the AI model is a signal to be calibrated; and
in a case that the function of the AI model is used for DPD, the input information of the AI model is an original signal.

20. The apparatus according to claim 17, wherein the first information is used for indicating at least one of the following:
in a case that the function of the AI model is used for CSI coding, the output information of the AI model is at least one of a precoding matrix indicator PMI and CSI coding information;
in a case that the function of the AI model is used for CSI decoding, the output information of the AI model is at least one of CSI and channel related information obtained through CSI processing;
in a case that the function of the AI model is used for positioning, the output information of the AI model is at least one of location information and location related information in channel information;
in a case that the function of the AI model is used for channel estimation, the output information of the AI model is estimated channel information;
in a case that the function of the AI model is used for TRS estimation, the output information of the AI model is time information;
in a case that the function of the AI model is used for PTRS, the output information of the AI model is at least one of phase information and phase tracking information;
in a case that the function of the AI model is used for beam management, the output information of the AI model is at least one of a selected beam and beam quality of the selected beam;
in a case that the function of the AI model is used for signal calibration, the output information of the AI model is a calibrated signal; and
in a case that the function of the AI model is used for DPD, the output information of the AI model is a pre-distorted signal.

21. A terminal, comprising a processor, a memory, and a program or instructions stored in the memory and capable of running on the processor, wherein when the program or the instructions are executed by the processor, the steps of the communication method according to any one of claims 1 to 16 are implemented.

22. A network-side device, comprising a processor, a memory, and a program or instructions stored in the memory and capable of running on the processor, wherein when the program or instructions are executed by the processor, the steps of the communication method according to any one of claims 1 to 16 are implemented.

23. A readable storage medium, wherein the readable storage medium stores a program or instructions, and when the program or the instructions are executed by a processor, the steps of the communication method according to any one of claims 1 to 16 are implemented.
